(19) Europäisches Patentamt
European Patent Office
Office européen des brevets

(11) EP 1 046 645 B1

(12) EUROPÄISCHE PATENTSCHRIFT

(45) Veröffentlichungstag und Bekanntmachung des Hinweises auf die Patenterteilung:
**10.12.2003 Patentblatt 2003/50**

(51) Int Cl.[7]: **C07F 7/12**, B01J 19/18

(21) Anmeldenummer: **00106370.0**

(22) Anmeldetag: **24.03.2000**

# (54) Verfahren zur Herstellung von Vinylchlorsilanen

Process for preparing vinylchlorosilanes

Procédé de préparation de vinylchlorosilanes

(84) Benannte Vertragsstaaten:
**AT BE CH CY DE DK ES FI FR GB GR IE IT LI LU MC NL PT SE**

(30) Priorität: **22.04.1999 DE 19918115**

(43) Veröffentlichungstag der Anmeldung:
**25.10.2000 Patentblatt 2000/43**

(73) Patentinhaber: **Degussa AG**
**40474 Düsseldorf (DE)**

(72) Erfinder:
- **Bade, Stefan, Dr.**
  **79618 Rheinfelden (DE)**
- **Rauleder, Hartwig, Dr.**
  **79618 Rheinfelden (DE)**
- **Schön, Uwe, Dr.**
  **79618 Rheinfelden (DE)**
- **Bollenrath, Franz-Michael, Dr.**
  **45772 Marl (DE)**

(56) Entgegenhaltungen:
**DE-A- 2 002 258**
**DE-A- 2 210 189**
**DE-A- 4 001 820**
**DE-A- 4 016 021**
**US-A- 4 175 871**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 046 645 B1

Printed by Jouve, 75001 PARIS (FR)

## Beschreibung

Die Erfindung betrifft ein Verfahren zur Herstellung von Vinylchlorsilanen durch unkatalysierte, thermische Reaktion von Chlorsilanen mit Vinylchlorid unter Verwendung eines Ringspaltreaktors mit gegebenenfalls rotierendem Verdrängerkörper.

## Stand der Technik

Vinyltrichlorsilan ist ein wertvolles Zwischenprodukt, das sich aufgrund seiner vier reaktionsfähigen Gruppen für viele Anwendungen eignet, beispielsweise bei der Schlichtung von Glasfasern und für die Herstellung von Kabelmaterialien verwendet wird.

Aus DE-PS 936 445, DE-OS 22 10 189 und insbesondere DE-PS 20 02 258 ist bekannt, daß beim Durchleiten von Vinylchlorid-Chlorsilan-Gemischen und insbesondere von Vinylchlorid-Trichlorsilan-Gemischen durch entsprechend aufgeheizte leere Rohre aus Keramik, Glas oder Eisen technisch akzeptable Ausbeuten an Vinylchlorsilanen erhalten werden. Die Reaktion verläuft rein thermisch, also ohne Katalysator. Bei der Umsetzung von Trichlorsilan mit Vinylchlorid laufen die folgenden Reaktionen ab.

Hauptreaktion:

$$C_2H_3Cl + SiHCl_3 \rightleftharpoons C_2H_3SiCl_3 + HCl$$

Neben dieser Gleichgewichtsreaktion gibt es die folgenden Neben- und Folgereaktionen:

$$C_2H_3Cl + SiHCl_3 \rightarrow SiCl_4 + C_2H_4$$

$$4\ SiHCl_3 \rightarrow 3\ SiCl_4 + Si + 2\ H_2$$

$$C_2H_3\ Cl \rightarrow C_2H_2 + HCl$$

$$C_2H_2 \rightarrow 2\ C + H_2$$

$$C_2\ H_4 + SiHCl_3 \rightarrow C_2\ H_5\ SiCl_3$$

$$C_2H_4 + SiHCl_3 \rightarrow C_2H_3SiCl_3 + H_2$$

$$C_2H_3\ SiCl_3 + SiHCl_3 \rightarrow Cl_3SiC_2H_4\ SiCl_3$$

Trotz dieser Neben- und Folgereaktionen beträgt nach DE 40 01 820 A1 die Selektivität für Vinyltrichlorsilan, bezogen auf das im Unterschuß eingesetzte Vinylchlorid, je nach dem Verhältnis der Edukte und dem Umsatzgrad 50 bis 98%, bei Rohren von 122 bis 150 cm Länge und Durchmessern von 25 bis 35 mm, Verweilzeiten von 0,2 bis 20 Sekunden, Reaktionstemperaturen von 400 bis 750°C und Drücken von 1 bis 3 bar. Dabei beträgt jedoch die Reaktorleistung (oder Kapazität) der Reaktoren nur 0,8 bis 3,2 t Vinyltrichlorsilan/Monat. Selektivität und Umsatzgrad verhalten sich zueinander umgekehrt proportional; die Reaktorleistung durchläuft ein Maximum in Abhängigkeit vom Umsatzgrad. Eine hohe Selektivität geht dementsprechend mit einer ungenügenden, wirtschaftlich nicht akzeptablen Reaktorleistung bei geringem Umsatzgrad einher. Gemäß DE-OS 20 02 258 bringt zwar die Vergrößerung des Rohrdurchmessers bis auf 50 mm eine dem größeren Reaktorvolumen proportionale Steigerung der Reaktorleistung. Bei noch größeren Durchmessern geht jedoch die spezifische Reaktorleistung, bezogen auf das Reaktorvolumen, zurück. Es ist also nicht möglich, die Raum-Zeit-Ausbeute an Vinyltrichlorsilan zu erhöhen oder auch nur zu halten, indem

man den Durchmesser des Reaktorrohres über 50 mm hinaus vergrößert.

Ein verbessertes Verfahren zur Herstellung von Vinylchlorsilanen durch Umsetzung von Chlorsilanen mit Vinylchlorid wird gemäß DE 40 01 820 A1 in einem Ringspaltreaktor durchgeführt, der ein beheizbares Reaktionsrohr mit einem Innendurchmesser $d_1$ aufweist, in dessen Innerem sich ein über die gesamte Länge des Reaktionsrohres erstreckender, axialsymmetrisch angeordneter und gegebenenfalls rotationsfähiger zylindrischer Verdrängerkörper mit einem Außendurchmesser $d_2$ befindet. Dabei gilt die Beziehung $d_1 = d_2 + 2a$, wobei a im allgemeinen mindestens 1 cm beträgt und stets <5 cm ist. Falls der Verdrängerkörper wesentlich kürzer ist als das Reaktionsrohr, wird die Ausbeute vermindert. Dieser Befund entspricht der Lehre der drei zuvor genannten Schriften, wonach bei Leerrohrreaktoren die Ausbeute abfällt, wenn der Rohrdurchmesser 5 cm überschreitet. Nach DE 40 16 021 A1 läßt sich die Kapazität des Reaktors bzw. die Raum-Zeit-Ausbeute des Verfahrens mit einem Ringspaltreaktor weiter steigern, wenn man die Reaktionskomponenten vor dem Eintritt in den Reaktor auf 120 bis 400°C vorwärmt. Aber auch mit dieser Maßnahme geht noch viel Reaktorvolumen verloren, in dem die Reaktionskomponenten auf ca. 550°C erhitzt werden, um dann im restlichen Reaktorvolumen adiabatisch weiterzureagieren.

Es wurde nun gefunden, daß sich Vinylchlorsilane durch thermische, nicht katalysierte Umsetzung von Chlorsilanen mit Vinylchlorid bei 550 bis 700°C unter Verwendung eines beheizten Ringspaltreaktors vorteilhaft herstellen lassen, wenn man die heißen Reaktionsgase nach Durchströmen des Ringspaltraumes rasch abkühlt, indem man sie mit einer Flüssigkeit quencht.

Bei dem neuen Verfahren verbindet sich auch bei hohen Umsatzgraden eine hohe Selektivität für das gewünschte Vinylchlorsilan mit einer wirtschaftlich akzeptablen hohen Reaktorleistung. Dieses vorteilhafte Ergebnis geht u.a. darauf zurück, daß das Verfahren eine gezielte Temperaturführung und -kontrolle nach dem Austritt des Reaktionsgemisches aus dem Ringspaltreaktor ermöglicht. Folge- oder Nebenreaktionen, die u.a. zur Abscheidung von Ruß und/oder elementarem Silicium sowie zur Bildung von Hochsiedern führen können, werden dementsprechend zurückgedrängt.

Erfindungsgemäß läßt sich insbesondere Vinyltrichlorsilan aus Trichlorsilan und Vinylchlorid vorteilhaft herstellen. Andere geeignete Chlorsilane mit einem substituierbaren wasserstoffatom sind z.B. Methylhydrogendichlorsilan und Ethylhydrogendichlorsilan.

Man setzt das Chlorsilan und Vinylchlorid vorteilhaft ohne ein verdünnendes flüssiges oder gasförmiges inertes Medium und zweckmäßig im Molverhältnis von 1:1 bis 5:1, vorzugsweise von 2:1 bis 4:1 ein. Die Reaktionskomponenten können mit Umgebungstemperatur oder, wie in DE 46 16 021 A1 beschrieben, auf 120 bis 400°C, vorteilhaft auf 220 bis 400°C vorerhitzt in den Ringspaltreaktor eingeführt werden, wo sie weiter aufgeheizt werden. Bei etwa 450°C setzt die exotherme Substitutionsreaktion ein, die bei etwa 550°C eine so hohe Geschwindigkeit erreicht, daß keine weitere Wärmezufuhr erforderlich ist, die Reaktion also im wesentlichen adiabatisch in Richtung auf das Gleichgewicht ablaufen kann. Die Zone des Ringspaltreaktors, in der die adiabatische Reaktion stattfindet, wird dementsprechend nicht beheizt. Die Temperaturen in dieser Zone liegen im allgemeinen im Bereich von 550 bis 700°C, vorteilhaft von 550 bis 650°C.

Das erfindungsgemäße Verfahren wird zweckmäßig bei Drücken von 1,1 bis 2,0 bar, vorteilhaft von 1,1 bis 1,4 bar durchgeführt. Die Verweilzeiten betragen in der Regel 0,2 bis 20 sec, vorteilhaft 1,0 bis 10 sec.

Als Ringspaltreaktor kann der in DE 40 01 820 A1 beschriebene Reaktor dienen. Dieser steht vorzugsweise senkrecht und umfaßt ein beheizbares zylindrisches Rohr mit einem gleich langen, axialsymmetrisch positionierten Verdrängerkörper, der fest angeordnet sein oder um seine Längsachse rotieren kann, z.B. mit 10 bis 100 U/min, vorteilhaft mit 20 bis 40 U/min. Ringspaltreaktoren für die Herstellung von Vinylchlorsilanen im technischen Maßstab können z.B. 1 bis 5 m lang sein. Die Innendurchmesser solcher Reaktoren können beispielsweise 400 bis 1.200 mm und vorteilhaft 500 bis 1.000 mm betragen.

Die Innenseite des zylindrischen Rohres und die Außenseite des Verdrängerkörpers bilden einen Ringspaltraum, in dem die Edukte auf die Starttemperatur erhitzt werden und die Reaktion stattfindet. Der Verdrängerkörper kann eine glatte Außenwand haben oder auf seiner gesamten Oberfläche bzw. einem Teil davon, beispielsweise beim Eintritt der Eduktgase beginnend, Elemente tragen, die die Strömungsgeschwindigkeit und/oder die Durchwirbelung der Reaktionsgase fördern und dadurch den Ringspaltraum von Ablagerungen fester Partikel freihalten. Bei den Elementen kann es sich z.B. um Metallstreifen handeln, die mit Unterbrechungen oder ununterbrochen im wesentlichen parallel zur Längsachse des Verdrängerkörpers laufen. Alternativ können die durchgehenden oder unterbrochenen Metallstreifen im spitzen Winkel von 20 bis 50° zur Längsachse angeordnet sein und dann eine Leitspirale bilden. Die Metallstreifen können auch als Stücke oder Noppen in regelmäßigen oder unregelmäßigen Abständen auf der Oberfläche des Verdrängerkörpers angebracht werden. Wenn ein Verdrängerkörper mit einer Leitspirale rotiert, dann geschieht dies zweckmäßig in einem solchen Drehsinn, daß die Leitspirale die Reaktionsgase in Richtung auf den Ausgang des Ringspaltreaktors fördert. Wenn die Metallstreifen keine Leitspirale bilden, sondern auf eine Weise angebracht sind, die in keinem Fall eine Förderung der Reaktionsgase bewirkt, kommt es auf die Drehrichtung nicht an.

Der Verdrängerkörper kann über die ganze Länge des Reaktors zylindrisch sein. Alternativ kann er vom Eintritt der Edukte bis zum Startpunkt der adiabatischen Reaktion, die wie erwähnt bei etwa 550°C einsetzt, zylindrisch sein

und sich von diesem Punkt oder von einem weiter in Richtung auf den Ausgang des Reaktors gelegenen Punkt an abrupt oder allmählich, z.B. konisch oder parabolisch, verjüngen, gegebenenfalls bis auf den Durchmesser der Drehachse. Auf diese Weise wird die Reaktorleistung oder Kapazität einer Anlage erhöht, wobei die Selektivität für das gewünschte Vinylchlorsilan, bezogen auf umgesetztes Vinylchlorid, unverändert hoch bleibt. Dies ist überraschend, weil ein wesentlicher Teil der Reaktion in einer Zone bzw. in einem Teil des Reaktors stattfindet, in dem die kritischen Parameter <50mm Durchmesser (bei dem ersterwähnten Verfahren des Standes der Technik) bzw. <50mm Spaltbreite (bei dem Verfahren nach DE 40 01 820 A1) bei weitem überschritten werden können. Der Startpunkt der adiabatischen Reaktion liegt, je nach den Edukten, der Heizleistung (wie später beschrieben) und der Strömungsgeschwindigkeit, im allgemeinen in einem Bereich von ein bis zwei Dritteln der Länge des Reaktors, vom Eintritt der Edukte gerechnet. In dem Teil des Reaktors, in dem der Verdängerkörper nicht mehr zylindrisch ist, sind auf dessen Oberfläche im allgemeinen keine die Durchwirbelung der Reaktionsgase fördernden Elemente angebracht.

Der Abstand zwischen der Innenwand des zylindrischen Rohres und der Außenwand des Verdrängerkörpers in seinem zylindrischen Teil beträgt vorteilhaft mindestens 10 mm und höchstens 50 mm. Etwa vorhandene Elemente, die die Durchwirbelung fördern, ragen vorteilhaft um mehr als die halbe Spaltbreite in den Ringspalt hinein. Zweckmäßig erstrecken sie sich über 60 bis 80% der Spaltbreite.

Das zylindrische Rohr, der Verdrängerkörper und die Elemente, die die Durchwirbelung der Reaktionsgase fördern, können aus den verschiedensten Materialien bestehen, die unter den Reaktionsbedingungen beständig sind, z.B. aus zunderfesten Stählen, die neben Eisen als Legierungsbestandteile Chrom, Nickel und Titan und/oder Molybdän und/oder Silicium enthalten.

Der Ringspaltreaktor ist mit einer regelbaren Heizvorrichtung versehen, die sich zweckmäßig über dessen gesamte Länge erstreckt und in mehrere unabhängige Segmente unterteilt sein kann. Es ist zwar möglich, die in den Ringspaltreaktor eintretenden, gegebenenfalls auf 120 bis 400°C vorerhitzten Eduktgase im Ringspaltreaktor so schnell aufzuheizen, daß die Temperatur etwa 550°C beträgt und die exotherme Reaktion ohne weitere Wärmezufuhr im wesentlichen adiabatisch abläuft, sobald die Reaktionsgase 1/3 bis 2/3 der Reaktorlänge passiert haben. Eine Heizvorrichtung auch im anschließenden Teil des Reaktors sichert jedoch die erwünschte Flexibilität für den Fall, daß sich der Startpunkt der adiabatischen Reaktion in Richtung auf den Ausgang verschiebt. Die Reaktionsgase werden zweckmäßig indirekt erhitzt, also durch Wärmeübertragung durch die Wand des zylindrischen Rohres. Beispielsweise kann das zylindrische Rohr mit einem gegebenenfalls unterteilten Mantel versehen sein, durch den überhitzter Dampf oder eine hoch beanspruchbare Wärmeträgerflüssigkeit (z.B. eine Salzschmelze oder Flüssigmetall) geleitet werden kann. Vorteilhaft ist jedoch das zylindrische Rohr mit einer gegebenenfalls in Segmente unterteilten elektrischen Außenheizung ausgestattet.

Nach dem Passieren des Ringspaltreaktors werden die heißen Reaktionsgase rasch abgekühlt, indem sie mit einer Flüssigkeit gequencht werden. Die Quenchvorrichtung kann unmittelbar unterhalb an den Ringspaltreaktor angefügt und sollte jedenfalls nicht weiter als etwa 1,5 m von dessen Ausgang entfernt sein. Bewährt hat sich ein konischer Quenchbehälter aus einem unter den Verfahrensbedingungen beständigen Material, der mit seiner kreisförmigen Öffnung unmittelbar an den zylindrischen Ringspaltreaktor anschließt. Die Quenchflüssigkeit kann z.B. durch eine Düse oder mehrere Düsen mit einem Durchmesser von 8 bis 25 mm in Strömungsrichtung kegelförmig in die heißen Reaktionsgase eingedüst werden.

Als Quenchflüssigkeit eignet sich z.B. Trichlorsilan oder Siliciumtetrachlorid, das erwünschte Vinylchlorsilan, wie z.B. Vinyltrichlorsilan, oder auch das rohe kondensierte Reaktionsgemisch, das in der Regel 25 bis 50 Gew.-% an dem erwünschten Vinylchlorsilan enthält. Vorteilhaft beträgt der Massenstrom der Quenchflüssigkeit das Zwei- bis Sechsfache des Massenstromes der gasförmigen Reaktionsprodukte. Die verdampfende Quenchflüssigkeit kühlt die Reaktionsgase, deren Temperatur am Ausgang des Ringspaltreaktors in der Regel 550 bis 700°C beträgt, rasch auf eine Temperatur von <200°C ab, so daß sich die Gleichgewichtslage praktisch nicht mehr ändert und unerwünschte Folgereaktionen praktisch nicht mehr stattfinden. Die gequenchten Reaktionsgase werden indirekt weiter abgekühlt und verflüssigt. Aus der flüssigen Phase gewinnt man das gewünschte Vinylchlorsilan durch Destillation, ebenso als Nebenprodukt Siliciumtetrachlorid. Nicht umgesetzte Edukte Trichlorsilan und Vinylchlorid werden in das Verfahren zurückgeführt. Der Chlorwasserstoff kann auf andere Weise genutzt werden, z.B. für die Herstellung von Chlorsilanen durch Reaktion mit Silicium.

Die Erfindung wird durch die folgenden Beispiele weiter erläutert, die jedoch nicht ihren Umfang begrenzen sollen, wie er in den Patentansprüchen definiert ist.

**Beispiel 1**

**Herstellung von Vinyltrichlorsilan in einem Ringspaltreaktor mit Quenchsystem**

Das Verfahren wird in einem technischen Reaktor durchgeführt, der als elektrisch beheizbarer Ringspaltreaktor mit einem zylindrischen Außenrohr und einem axial angeordneten und ebenfalls zylindrischen Verdrängerkörper

mit vertikal und horizontal angeordneten Metallstreifen ausgebildet ist. Reaktor und Verdrängerkörper sind 2,5 m lang, der Innendurchmesser des zylindrischen Außenrohres beträgt 600 mm, der Außendurchmesser des Verdrängerkörpers 560 mm und die Breite des Ringspalts dementsprechend 20 mm. Der drehbare Verdrängerkörper rotiert während des Versuchs mit 30 U/min. An den Ringspaltreaktor schließt sich unmittelbar ein sich konisch verjüngendes Quenchgefäß mit einer in Strömungsrichtung angeordneten Quenchdüse an.

Dem Kopf des Ringspaltreaktors wird ein auf 380°C vorerhitztes gasförmiges Gemisch aus 100 kg/h Vinylchlorid und 700 kg/h Vinylchlorid zugeführt. Das molare Verhältnis der beiden Komponenten beträgt 3,23. Im Reaktor werden die Eduktgase weiter aufgeheizt, bis bei etwa 550°C die exotherme Reaktion einsetzt. Die Temperatur steigt bis auf 650°C an. Das Reaktionsgemisch tritt nach einer Verweilzeit von 1,5 sec mit ca. 585°C in das Quenchgefäß ein, dem als Quenchflüssigkeit 2 t/h flüssiges Reaktionsgemisch mit einer Temperatur von 30°C zugeführt werden. Dadurch wird die Temperatur des Reaktionsgemisches auf 145°C gesenkt.

Am Ausgang des Quenchgefäßes hat das Reaktionsgemisch abzüglich der Quenchflüssigkeit die folgende Zusammensetzung:

| Komponente | Mengenstrom (kg/h) |
|---|---|
| Vinylchlorid | 14,9 |
| Trichlorsilan | 495,2 |
| Vinyltrichlorsilan | 193,3 |
| Chlorwasserstoff | 43,6 |
| Siliciumtetrachlorid | 38,1 |
| Hochsieder und weitere Nebenkomponenten | 15,1 |

Hieraus ergibt sich ein Vinylchlorid-Umsatz von 85% und eine Vinyltrichlorsilan-Selektivität, bezogen auf umgesetztes Vinylchlorid, von 88%. Die Produktionsleistung des Reaktors liegt bei 139 t Vinyltrichlorsilan pro Monat.

**Beispiel 2 - Vergleichsbeispiel**

**Herstellung von Vinyltrichlorsilan in einem Ringspaltreaktor ohne Quenchsystem**

Man verwendet den Reaktor des Beispiels 1, jedoch ohne Quenchsystem. Die Eduktgase, 100 kg/h Vinylchlorid und 700 kg/h Trichlorsilan (Molverhältnis 3,23), werden wiederum auf 380°C vorgeheizt und im Reaktor so weit erhitzt, daß die Reaktion einsetzt. Der Verdrängerkörper rotiert wiederum mit 30 U/min. Nach einer Verweilzeit von 1,5 sec tritt das Reaktionsgemisch mit einer Temperatur von 585°C aus dem Ringspaltraum aus. Etwa 40 cm unterhalb des Verdrängerkörpers beträgt die Temperatur 680°C. Das Reaktionsgemisch wird zur Aufarbeitung in ein System von indirekt gekühlten Produktkühlern geleitet.

Das Reaktionsgemisch hat am Ausgang des Reaktors die folgende Zusammensetzung:

| Komponente | Mengenstrom (kg/h) |
|---|---|
| Vinylchlorid | 8,9 |
| Trichlorsilan | 486,5 |
| Vinyltrichlorsilan | 176,4 |
| Chlorwasserstoff | 39,8 |
| Siliciumtetrachlorid | 55,2 |
| Hochsieder und weitere Nebenkomponenten | 33,8 |

Hieraus ergibt sich ein Vinylchlorid-Umsatz von 91% und eine Vinyltrichlorsilan-Selektivität, bezogen auf umgesetztes Vinylchlorid, von 75%. Die Produktionsleistung des Reaktors liegt bei 127 t Vinyltrichlorsilan pro Monat.

Der Vergleich mit Beispiel 1, bei dem das Reaktionsgemisch unmittelbar nach dem Austritt aus dem Ringspaltraum gequencht wird, zeigt eine deutlich geringere Vinyltrichlorsilan-Selektivität bei höherem Vinylchlorid-Umsatz. Die geringere Vinyltrichlorsilan-Selektivität wird durch einen höheren Anteil an Hochsiedern und anderen Nebenprodukten sowie eine Abscheidung von Silicium und Ruß im Reaktor und in den Leitungen zu den Produktkühlern verursacht. Der Vinylchlorid-Umsatz liegt über dem Gleichgewichtsumsatz, weil die hohen Temperaturen bewirken, daß sich Vinylchlorid zu Ruß und Trichlorsilan zu Silicium zersetzt. Diese Zersetzungsreaktionen sind exotherm, so daß

die Temperatur unterhalb des Verdrängerkörpers hoch und nur noch sehr schwer zu kontrollieren ist.

Man erkennt weiterhin, daß ein hoher Vinylchlorid-Umsatz allein nicht die Produktionsleistung des Reaktors erhöht. Das Quenchen der Reaktionsgase bewirkt eine höhere Vinyltrichlorsilan-Selektivität, die trotz geringeren Vinylchlorid-Umsatzes zu einer Steigerung der Reaktorleistung führt.

**Patentansprüche**

1. Verfahren zur Herstellung von Vinylchlorsilanen durch thermische, nicht katalysierte Umsetzung von Chlorsilanen mit Vinylchlorid bei 550 bis 700°C unter Verwendung eines Ringspaltreaktors, **dadurch gekennzeichnet, daß** man die heißen Reaktionsgase nach Durchströmen des Ringspaltraumes rasch abkühlt, indem man sie mit einer Flüssigkeit quencht.

2. Verfahren nach Anspruch 1, **dadurch gekennzeichnet, daß** der Ringspaltraum durch einen in einem zylindrischen Rohr axialsymmetrisch angeordneten, sich über die gesamte Länge des Ringspaltreaktors erstreckenden und gegebenenfalls rotationsfähigen Verdrängerkörper erzeugt wird.

3. Verfahren nach Anspruch 2, **dadurch gekennzeichnet, daß** der Verdrängerkörper in seiner gesamten Länge oder einem Teil davon Elemente trägt, die die Durchwirbelung der Reaktionsgase fördern und den Ringspaltraum von Ablagerungen fester Partikel freihalten.

4. Verfahren nach Anspruch 3, **dadurch gekennzeichnet, daß** die Elemente eine Spirale bilden oder Noppen sind.

5. Verfahren nach einem der Ansprüche 2 bis 4, **dadurch gekennzeichnet, daß** die Elemente eine Höhe haben, die 60 bis 80 % der Breite des Ringspaltraumes beträgt.

6. Verfahren nach einem der Ansprüche 2 bis 5, **dadurch gekennzeichnet, daß** der Verdrängerkörper über die ganze Länge des Reaktors zylindrisch ist.

7. Verfahren nach einem der Ansprüche 2 bis 5, **dadurch gekennzeichnet, daß** der Verdrängerkörper vom Eintritt der Edukte bis zum Startpunkt der adiabatischen Reaktion zylindrisch ist und sich von diesem Punkt oder von einem weiter in Richtung auf den Ausgang des Reaktors gelegenen Punkt an sprunghaft oder allmählich verjüngt, gegebenenfalls bis auf den Durchmesser der Drehachse.

8. Verfahren nach einem der Ansprüche 1 bis 7, **dadurch gekennzeichnet, daß** der Ringspaltraum in den Teilen, in denen der Verdrängerkörper zylindrisch ist, 10 bis 50 mm breit ist.

9. Verfahren nach Anspruch 8, **dadurch gekennzeichnet, daß** der Ringspaltraum 20 bis 50 mm breit ist.

10. Verfahren nach einem der Ansprüche 1 bis 9, **dadurch gekennzeichnet, daß** die Temperatur der adiabatischen Reaktion 550 bis 650°C beträgt.

11. Verfahren nach einem der Ansprüche 1 bis 10, **dadurch gekennzeichnet, daß** der Druck 1,1 bar bis 2,0 bar beträgt.

12. Verfahren nach einem der Ansprüche 1 bis 10, **dadurch gekennzeichnet, daß** der Druck 1,1 bar bis 1,4 bar beträgt.

13. Verfahren nach einem der Ansprüche 1 bis 12, dadurch ge**gekennzeichnet**, daß die Verweilzeit 0,2 bis 20 sec beträgt.

14. Verfahren nach einem der Ansprüche 1 bis 12, **dadurch gekennzeichnet, daß** die Verweilzeit 1,0 bis 10 sec beträgt.

15. Verfahren nach einem der Ansprüche 1 bis 14, **dadurch gekennzeichnet, daß** das molare Verhältnis von Chlorsilan zu Vinylchlorid 1:1 bis 5:1 beträgt.

16. Verfahren nach einem der Ansprüche 1 bis 16, **dadurch gekennzeichnet, daß** das Chlorsilan Trichlorsilan ist.

17. Verfahren nach einem der Ansprüche 1 bis 16, **dadurch gekennzeichnet, daß** die Edukte getrennt oder im Gemisch auf eine Temperatur von 120 bis 400°C vorerhitzt werden.

**18.** Verfahren nach einem der Ansprüche 1 bis 16, **dadurch gekennzeichnet, daß** die Edukte getrennt oder im Gemisch auf eine Temperatur von 220 bis 400°C vorerhitzt werden.

**19.** Verfahren nach einem der Ansprüche 1 bis 18, **dadurch gekennzeichnet, daß** man als Quenchflüssigkeit Trichlorsilan, Siliciumtetrachlorid, das erzeugte Vinylchlorsilan oder flüssiges Reaktionsgemisch verwendet.

**20.** Verfahren nach Anspruch 19, **dadurch gekennzeichnet, daß** der Massenstrom der Quenchflüssigkeit das Zwei- bis Sechsfache des Massenstromes der Reaktionsgase beträgt.

**21.** Verfahren nach Anspruch 19 oder 20, **dadurch gekennzeichnet, daß** die Quenchzone an den Ringspaltreaktor unmittelbar anschließt oder maximal etwa 1,5 m vom Ausgang dieser Zone entfernt ist.

**22.** Verfahren nach einem der Ansprüche 19 bis 21, **dadurch gekennzeichnet, daß** die Quenchflüssigkeit durch eine Düse oder mehrere Düsen mit einem Durchmesser von 8 bis 25 mm in Strömungsrichtung kegelförmig in die heißen Reaktionsgase eingedüst wird.

## Claims

**1.** A process for preparing vinylchlorosilanes by thermal, non-catalysed reaction of chlorosilanes with vinyl chloride at from 550 to 700°C using a ring-gap reactor, **characterized in that** it comprises rapidly cooling the hot reaction gases, after they have flowed through the ring-gap space, by quenching them with a liquid.

**2.** A process according to claim 1, **characterized in that** the ring-gap space is produced by an, if appropriate, rotatable displacement body which is arranged axially symmetrical in a cylindrical tube and extends over the entire length of the ring-gap reactor.

**3.** A process according to claim 2, **characterized in that** the displacement body carries over its entire length or a part thereof elements which promote the vortexing of the reaction gases and keep the ring-gap space free from deposits of solid particles.

**4.** A process according to claim 3, **characterized in that** the elements form a spiral or are bumps.

**5.** A process according to any one of claims 2 to 4, **characterized in that** the elements have a height which is from 60 to 80% of the width of the ring-gap space.

**6.** A process according to any one of claims 2 to 5, **characterized in that** the displacement body is cylindrical over the entire length of the reactor.

**7.** A process according to any one of claims 2 to 5, **characterized in that** the displacement body is cylindrical from the entry of the starting materials to the starting point of the adiabatic reaction and, from this point or from a point situated further toward the outlet of the reactor, tapers abruptly or gradually as far as if appropriate the diameter of the rotary axle.

**8.** A process according to any one of claims 1 to 7, **characterized in that** the ring-gap space is from 10 to 50 mm in width in the parts in which the displacement body is cylindrical.

**9.** A process according to claim 8, **characterized in that** the ring-gap space is from 20 to 50 mm in width.

**10.** A process according to any one of claims 1 to 9, **characterized in that** the temperature of the adiabatic reaction is from 550 to 650°C.

**11.** A process according to any one of claims 1 to 10, **characterized in that** the pressure is from 1.1 bar to 2.0 bar.

**12.** A process according to any one of claims 1 to 10, **characterized in that** the pressure is from 1.1 bar to 1.4 bar.

13. A process according to any one of claims 1 to 12, **characterized in that** the residence time is from 0.2 to 20 seconds.

14. A process according to any one of claims 1 to 12, **characterized in that** the residence time is from 1.0 to 10 seconds.

15. A process according to any one of claims 1 to 14, **characterized in that** the molar ratio of chlorosilane to vinyl chloride is from 1:1 to 5:1.

16. A process according to any one of claims 1 to 16, **characterized in that** the chlorosilane is trichlorosilane.

17. A process according to any one of claims 1 to 16, **characterized in that** the starting materials are preheated separately or in a mixture to a temperature of from 120 to 400°C.

18. A process according to any one of claims 1 to 16, **characterized in that** the starting materials are preheated separately or in a mixture to a temperature of from 220 to 400°C.

19. A process according to any one of claims 1 to 18, **characterized in that** the quenching liquid used is trichlorosilane, silicon tetrachloride, the vinylchlorosilane produced or liquid reaction mixture.

20. A process according to claim 19, **characterized in that** the mass flow rate of the quenching liquid is 2 to 6 times the mass flow rate of the reaction gases.

21. A process according to claim 19 or 20, **characterized in that** the quenching zone is directly connected to the ring-gap reactor or is a maximum of about 1.5 m from the outlet of this zone.

22. A process according to any one of claims 19 to 21, **characterized in that** the quenching liquid is injected into the hot reaction gases in a conical shape in the direction of flow by a nozzle or plurality of nozzles having a diameter of from 8 to 25 mm.

**Revendications**

1. Procédé pour la préparation de vinylchlorosilanes par transformation thermique, non catalysée de chlorosilanes avec du chlorure de vinyle à 550 jusqu'à 700°C avec utilisation d'un réacteur à fente annulaire, **caractérisé en ce qu'**on refroidit rapidement les gaz de réaction chauds après leur traversée de la chambre à fente annulaire en les refroidissant brusquement avec un liquide.

2. Procédé selon la revendication 1, **caractérisé en ce que** la chambre à fente annulaire est obtenue par un corps de refoulement, le cas échéant rotatif, disposé de manière symétrique par rapport à l'axe dans un tuyau cylindrique et s'étendant sur toute la longueur du réacteur à fente annulaire.

3. Procédé selon la revendication 2, **caractérisé en ce que** le corps de refoulement porte sur toute sa longueur ou une partie de celle-ci des éléments qui favorisent le brassage des gaz de réaction et qui gardent la chambre à fente annulaire exempte de dépôts de particules solides.

4. Procédé selon la revendication 3,
**caractérisé en ce que** les éléments forment une spirale ou sont des boutons.

5. Procédé selon l'une quelconque des revendications 2 à 4, **caractérisé en ce que** les éléments présentent une hauteur qui représente 60 à 80% de la largeur de la chambre à fente annulaire.

6. Procédé selon l'une quelconque des revendications 2 à 5, **caractérisé en ce que** le corps de refoulement est cylindrique sur toute la longueur du réacteur.

7. Procédé selon l'une quelconque des revendications 2 à 5, **caractérisé en ce que** le corps de refoulement est cylindrique à partir de l'entrée des produits de départ jusqu'au point de départ de la réaction adiabatique et se rétrécit graduellement ou brutalement à partir de ce point ou d'un autre point situé plus loin dans le sens vers la

sortie du réacteur, le cas échéant jusqu'au diamètre de l'axe de rotation.

**8.** Procédé selon l'une quelconque des revendications 1 à 7, **caractérisé en ce que** la chambre à fente annulaire présente une largeur de 10 à 50 mm dans les parties dans lesquelles le corps de refoulement est cylindrique.

**9.** Procédé selon la revendication 8, **caractérisé** en ce la zone à fente annulaire présente une largeur de 20 à 50 mm.

**10.** Procédé selon l'une quelconque des revendications 1 à 9, **caractérisé en ce que** la température de la réaction adiabatique est de 550 à 650°C.

**11.** Procédé selon l'une quelconque des revendications 1 à 10, **caractérisé en ce que** la pression est de 1,1 bar à 2,0 bars.

**12.** Procédé selon l'une quelconque des revendications 1 à 10, **caractérisé en ce que** la pression est de 1,1 bar à 1,4 bar.

**13.** Procédé selon l'une quelconque des revendications 1 à 12, **caractérisé en ce que** le temps de séjour est de 0,2 à 20 secondes.

**14.** Procédé selon l'une quelconque des revendications 1 à 12, **caractérisé en ce que** le temps de séjour est de 1,0 à 10 secondes.

**15.** Procédé selon l'une quelconque des revendications 1 à 14, **caractérisé en ce que** le rapport molaire de chlorosilane à chlorure de vinyle est de 1:1 à 5:1.

**16.** Procédé selon l'une quelconque des revendications 1 à 16, **caractérisé en ce que** le chlorosilane est le trichlorosilane.

**17.** Procédé selon l'une quelconque des revendications 1 à 16, **caractérisé en ce que** les produits de départ sont préchauffés séparément ou en mélange à une température de 120 à 400°C.

**18.** Procédé selon l'une quelconque des revendications 1 à 16, **caractérisé en ce que** les produits de départ sont préchauffés séparément ou en mélange à une température de 220 à 400°C.

**19.** Procédé selon l'une quelconque des revendications 1 à 18, **caractérisé en ce qu'**on utilise comme liquide de refroidissement brusque du trichlorosilane, du tétrachlorure de silicium, le vinylchlorosilane produit ou du mélange réactionnel liquide.

**20.** Procédé selon la revendication 19, **caractérisé en ce que** le flux massique du liquide de refroidissement brusque représente deux à six fois le flux massique des gaz de réaction.

**21.** Procédé selon la revendication 19 ou 20, **caractérisé en ce que** la zone de refroidissement brusque est directement consécutive au réacteur à fente annulaire ou distante d'au maximum 1,5 m de la sortie de cette zone.

**22.** Procédé selon l'une quelconque des revendications 19 à 21, **caractérisé en ce que** le liquide de refroidissement brusque est pulvérisé via un gicleur ou plusieurs gicleurs présentant un diamètre de 8 à 25 mm dans le sens de l'écoulement, en forme conique, dans les gaz de réaction chauds.